# FASCICULE DE BREVET EUROPEEN

(11) **EP 2 474 750 B1**
(45) Date de publication et mention de la délivrance du brevet: **20.04.2016**
(21) Numéro de dépôt: 12354001.5
(22) Date de dépôt: 05.01.2012
(51) Int. Cl.: F16B 37/12

(54) **Ensemble comprenant un support, et un insert de liaison, et son procédé de montage**
Einheit, die aus einer Halterung und einem Verbindungseinsatz besteht, und Montageverfahren
Assembly comprising a support and a connecting insert, and method for assembling same

(30) Priorité: 07.01.2011 FR 1100056
(43) Date de publication de la demande: 11.07.2012
(73) Titulaire: Bollhoff Otalu S.A., 73490 La Ravoire (FR)
(72) Inventeur: Billion Laroute, David, 38380 Saint Laurent du Pont (FR); Berlire, Emmanuelle, 73190 Challes-les-Eaux (FR); Lejars, Patrick, 73610 St. Alban de Montbel (FR)
(74) Mandataire: Gris, Sébastien

(56) Documents cités:
- DE-A1- 3 149 938
- DE-A1-102009 021 326
- GB-A- 1 497 965

## Description

### Domaine technique de l'invention

L'invention est relative à un ensemble comprenant un support, et un insert de liaison, l'insert étant pourvu :
- d'une collerette en butée axiale contre une première face du support,
- d'un fût reçu dans un orifice du support,
et l'ensemble comprenant en outre des moyens évitant la rotation du fût de l'insert à l'intérieur de l'orifice du support

### État de la technique

Le support appartenant à l'ensemble conforme à l'invention est, par exemple, de forme plane alors qu'un l'organe rapporté monté dans l'insert est allongé, en étant notamment solidarisé perpendiculairement au support. À titre purement indicatif, le support est un panneau d'un coffre de véhicule automobile, alors que l'organe rapporté est une tige télescopique permettant la mise en mouvement de ce coffre. Dans ce cas, l'extrémité de montage de cette tige coopère avec la carrosserie du véhicule automobile. L'invention vise des supports en tous matériaux, que ce soit notamment métallique ou en matière plastique.

Dans le cas de supports en matière plastique, on connaît tout d'abord des inserts décolletés, qui sont rapportés postérieurement au moulage du support. Dans ce cas, le support est creusé d'un orifice de section supérieure à celle de l'insert. Puis ce dernier est placé dans l'orifice, dont les parois sont chauffées afin que la matière plastique flue en direction de l'insert et vienne se solidifier contre la périphérie de celui-ci. On a également proposé des inserts de type auto-taraudant, qui sont directement introduits dans le support. Enfin, il est connu de placer l'insert directement dans le moule de fabrication du support, de sorte que cet insert est naturellement enrobé par la matière plastique lors de l'injection de cette dernière.

Dans le cas de supports métalliques, il est connu d'utiliser un insert pourvu d'une collerette d'extrémité, formant butée axiale dans un premier sens. Cet insert est introduit dans un orifice ménagé dans le support, puis fait l'objet d'une opération de type rivetage ou sertissage, afin de le solidariser en translation vis à vis du support, dans le sens opposé. Enfin, l'organe rapporté est vissé dans le taraudage de l'insert, du côté de la collerette précitée.

Ces différentes solutions connues présentent cependant des inconvénients. En effet elles nécessitent des opérations dites de reprise, qui sont longues et parfois délicates à mettre en oeuvre, et impliquent l'acquisition d'un outillage onéreux, dont la maintenance est compliquée. De plus, ces solutions font appel à des pièces d'usure d'une structure complexe et d'un coût substantiel, ce qui est désavantageux dans la mesure où ces pièces font l'objet de fréquents remplacements.

### Objet de l'invention

Dans ces conditions, l'invention vise à proposer un ensemble comprenant un support, un insert de liaison et avantageusement un organe rapporté, dont les deux, ou trois, éléments constitutifs peuvent être solidarisés mutuellement de façon fiable. Elle vise également à proposer un tel ensemble, faisant appel à un insert dont la structure est simplifiée, par rapport à l'art antérieur. Elle vise enfin à proposer un tel ensemble, dont le montage est rapide et commode pour l'utilisateur.

L'ensemble selon l'invention est remarquable par les revendications annexées et notamment en ce qu'il comporte des moyens de coincement mutuel de l'insert et du support, les moyens de coincement comprennent au moins une languette de coincement appartenant au support, repliée à l'opposé de la première face, chaque languette étant propre à exercer, sur une face en regard de l'insert, un effort de coincement dirigé radialement vers l'intérieur de l'orifice..

Avantageusement, l'ensemble comprend en outre un organe rapporté, l'insert de liaison réalisant la liaison entre le support et cet organe rapporté par des moyens de fixation, l'organe rapporté comportant une extrémité de fixation sur l'insert et une extrémité de montage sur une structure, et l'extrémité de montage de l'organe rapporté est disposée à l'opposé de la première face du support, de sorte qu'un effort de traction, exercé par l'organe rapporté sur le support, tend à plaquer la collerette contre la première face.

Ceci permet, en particulier, de conférer une structure particulièrement simple à l'insert, en particulier puisque l'organe rapporté s'étend du côté où s'exerce l'effort principal de traction sur le support, à savoir à l'opposé de la collerette. Dans ces conditions, cet effort sollicite la collerette, laquelle forme un organe de butée naturel. En revanche, un éventuel effort de traction, s'exerçant dans le sens opposé, possède une intensité beaucoup plus faible, de sorte qu'il n'est plus avantageux de prévoir des moyens du type rivetage ou sertissage, utilisés dans l'art antérieur. De tels moyens sont cependant indispensables dans les solutions connues puisque l'organe rapporté s'étend du côté de la collerette, de sorte que cette dernière n'apporte pas une fonction de butée, lorsque est exercé l'effort de traction principal.

L'ensemble selon l'invention peut comporter les caractéristiques suivantes, prises isolément ou selon toute combinaison techniquement possible :
- il comprend des moyens de coincement mutuel de l'insert et du support formant avantageusement également moyens d'anti-rotation
- l'insert est de section polygonale, et il est prévu au moins deux languettes de coincement, réparties angulairement de façon régulière à la périphérie de l'insert
- les moyens de coincement comprennent au moins une zone de l'insert, présentant des dimensions transversales supérieures à la région de l'orifice recevant cette zone de l'insert
- la zone de plus grande dimension transversale comprend au moins une saillie axiale, s'étendant à la périphérie de l'insert
- le fût et l'orifice sont de section polygonale, et la zone de plus grande dimension transversale est formé par au moins un couple de faces opposées du fût, coopérant avec un couple en regard de faces opposées de l'orifice
- l'insert présente un pied d'introduction, de plus faibles dimensions transversales, opposé à la collerette.

L'invention a également pour objet un procédé de montage de l'ensemble ci-dessus, caractérisé en ce que:
- on introduit l'insert dans l'orifice du support, jusqu'à ce que sa collerette vienne en butée contre la première face du support.

Selon une caractéristique de l'invention on forme, sur le support, au moins une languette déformable délimitant une ouverture, dont les dimensions transversales sont inférieures à celles de l'insert, et on fait passer l'insert au travers de l'ouverture, de façon à déformer la ou chaque languette.

### Description sommaire des dessins

D'autres avantages et caractéristiques ressortiront plus clairement de la description qui va suivre d'un mode particulier de réalisation de l'invention donné à titre d'exemple non limitatif et représenté sur les dessins annexés, dans lesquels :
- la figure 1 est une vue de face avec coupe longitudinale partielle, illustrant un support, un organe rapporté et un insert, durant leur montage
- la figure 2 est une vue de face avec coupe longitudinale partielle, illustrant le support, l'organe rapporté et l'insert, une fois montés
- la figure 3 est une vue en coupe transversale de l'insert et du support,
- la figure 4 est une vue de dessus de l'insert et du support,
- les figures 5 et 6 sont des vues respectivement de dessous et en coupe longitudinale, illustrant un support Intervenant dans un premier mode de réalisation de l'invention.
- les figures 7 et 8 sont des vues, respectivement de dessous et en coupe longitudinale, illustrant un insert monté dans le support des figures 5 et 6,
- la figure 9 est une vue de dessous, analogue aux figures 5 et 7, illustrant un insert monté dans un support conforme à une variante supplémentaire de l'invention.

### Description de modes préférentiels de réalisation

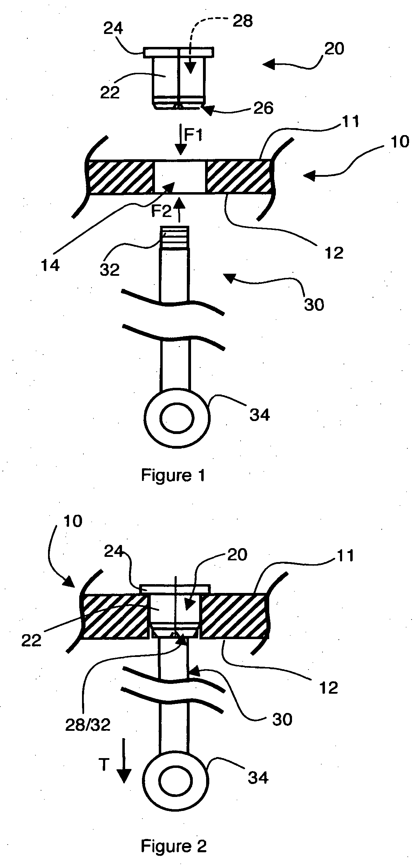

Les figures 1 et 2 représentent un premier mode de réalisation, faisant intervenir un support 10, ainsi qu'un insert de liaison 20, permettant avantageusement de rapporter un organe 30 sur le support 10.

Dans ce premier mode, le support 10 est plus particulièrement, mais non exclusivement, réalisé en une matière plastique appropriée. Il se présente sous forme d'une plaque, dont on note 11 et 12 les deux faces opposées. Ce support est creusé d'un orifice traversant 14, dont la section transversale est non circulaire, en particulier polygonale, et en l'occurrence hexagonale dans l'exemple des figures 1 et 2.

L'insert 20 possède un fût 22, de section complémentaire de celle de l'orifice 14, de manière à permettre l'insertion de ce fût 22 en ajustement serré dans cet orifice. À une première extrémité, ce fût est terminé par une collerette 24, de plus grande dimension transversale. De façon avantageuse, cette collerette est non circulaire, de manière à faciliter le montage du fût comme on le verra dans ce qui suit. À son extrémité opposée, le fût est terminé par un pied 26, de même section transversale que le fût mais de dimensions légèrement inférieures. Ce fût est pourvu d'un taraudage 28, s'étendant sur au moins une partie de sa dimension axiale. Dans l'exemple illustré, ce taraudage débouche uniquement du côté du pied, étant entendu qu'il peut déboucher également du côté de la collerette.

Enfin, l'organe rapporté 30 est de type classique. Dans l'exemple illustré, il affecte la forme d'une tige, dont une première extrémité 32 est munie d'un filetage, susceptible de coopérer avec le taraudage 28 précité. Autrement dit, le fût de l'insert comporte des moyens de fixation 28 de l'organe rapporté 30, en particulier par vissage. Par ailleurs l'autre extrémité 34 de l'organe est destinée à être montée, par tout moyen appropriée, sur une structure non représentée, telle une carrosserie de véhicule automobile.

Le montage de la tige 30 sur la plaque 10, au moyen de l'insert 20, va maintenant être explicité. Il s'agit tout d'abord d'introduire le pied 26 de l'insert 20 dans l'orifice 14, depuis la première face 11 de la plaque, comme matérialisé par la flèche F1. On notera que les dimensions transversales réduites du pied favorisent cette insertion. Par ailleurs, on peut avantageusement prévoir que la collerette présente un profil non circulaire, afin d'assurer une fonction de détrompage pour l'utilisateur.

L'introduction axiale de l'insert se poursuit, jusqu'à venue en butée de la collerette 24 contre la première face 11. Au terme de cette opération, le taraudage 28 est accessible, de sorte que le monteur y visse l'extrémité filetée 32, depuis la seconde face 12 de la plaque, ce qui est matérialisé par la flèche F2. L'ensemble ainsi formé comprend la plaque 10, à laquelle est reliée la tige 30 via l'insert 20, cette tige s'étendant du côté de la face 12 opposée à la collerette 24.

Comme cela ressort de la description du montage de ces différents éléments, l'invention est avantageuse notamment en ce que l'insert présente une structure simple, ainsi qu'une mise en place particulièrement commode, puisqu'elle consiste en une simple poussée axiale. En service, l'effort de traction principal de la tige s'exerce en direction de son extrémité de montage, selon la flèche T à la figure 2. Ceci contribue alors à plaquer la collerette 24 contre la face 11 en regard du support. Selon l'utilisation et les efforts mis en oeuvre, l'organe rapporté n'est pas nécessaire.

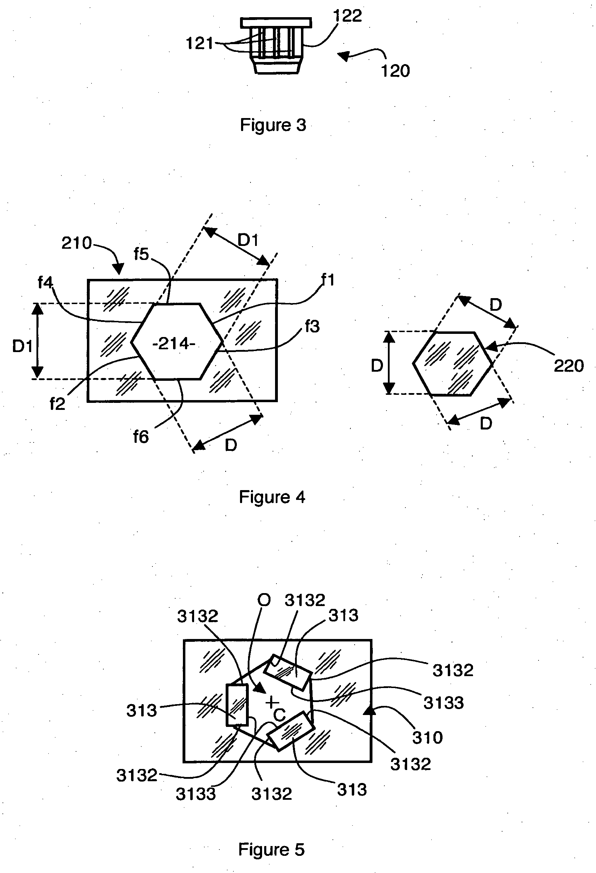

La figure 3 illustre une première possibilité, visant un maintien particulièrement sûr de l'insert à l'intérieur de l'orifice. L'insert 120 est muni de saillies 121, s'étendant axialement en étant réparties à la périphérie extérieure du fût 122. Ces saillies, ou « godrons », créent des zones localisées où la cote transversale de l'insert est supérieure à celle de l'orifice. L'introduction est alors réalisée en force, puis la présence des « surcotes », décrites ci-dessus, empêche tout retrait intempestif de l'insert hors de l'orifice.

Une variante de réalisation de la figure 3 est illustrée à la figure 4. On suppose que l'insert 220 présente une section hexagonale régulière, à savoir que tous les couples de côtés opposés sont séparés par une même distance, notée D. La section transversale de l'orifice 214 du support 210 n'est en revanche pas en régulière, en ce que seules deux faces opposées f1 et f2 sont séparées de la distance D. En revanche, les autres couples de faces, respectivement f3 et f4, ainsi que f5 et f6, sont séparées par une distance D1, légèrement inférieure à D.

À titre non limitatif, on peut prévoir que le rapport (D-D1)/D est compris entre 0,15 et 0,20. D'une manière plus générale, l'homme du métier ajustera la valeur de ce rapport en fonction de différents paramètres, tels que notamment la nature des matériaux ou encore la géométrie choisie. De façon analogue à ce qui est décrit au paragraphe immédiatement ci-dessus, la coopération des parois de l'insert avec les faces en regard f3 à f6, assure un maintien en position fiable de l'insert. À titre de variante, on peut prévoir que seul un couple de faces opposées est espacé de la valeur réduite D1, alors que les autres faces sont deux à deux distantes de la valeur nominale D. De plus, on peut prévoir de conférer à l'insert et à l'orifice une forme différente d'un hexagone, tout en espaçant au moins certaines des faces en regard d'une valeur inférieure à la distance nominale.

Un premier mode de réalisation de l'invention va maintenant être décrit, en référence aux figures 5 et suivantes, plus particulièrement destiné à un support métallique 310. il s'agit tout d'abord de déformer ce support 310, par exemple par poinçonnage, de façon à former trois languettes 313, s'étendant à la périphérie d'un point central C, définissant l'endroit précis où doit être positionné le centre de l'insert.

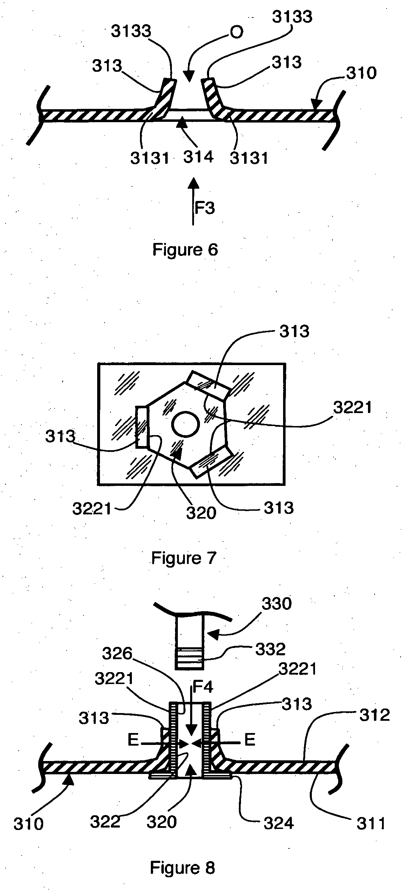

Pour chaque languette, on note 3131 la base, à savoir sa jonction avec le corps plan du support, 3132 ses deux flancs latéraux et 3133 son extrémité libre axiale. Vues de dessous, comme illustré à la figure 5, les trois bases 3131 forment à peu près un hexagone, centré sur le point C. Comme le montre la figure 6, ces bases délimitent un orifice 314, dont les dimensions transversales sont voisines de celles de l'insert. De plus ces trois languettes sont dirigées les unes vers les autres, de sorte que les trois extrémités libres 3133 définissent une ouverture O, dont les dimensions transversales sont inférieures à celles de l'insert 320.

On introduit tout d'abord l'insert entre les languettes, depuis la face 311 du support, opposée aux extrémités 3133, selon la flèche F3. Etant donné que, comme on l'a vu ci-dessus, l'ouverture de passage O est plus étroite que l'insert, ce dernier repousse les languettes radialement vers l'extérieur, de façon à les déformer. Au terme du déplacement axial de l'insert 320, comme le montre la figure 8, la collerette 324 de ce dernier vient en butée contre la face 311 du support.

De plus, trois des faces hexagonales de son fût 322, notées 3221, s'étendent au contact des languettes. Etant donné que ces dernières ont subi une déformation, elles exercent sur les faces 3221 de l'insert des efforts résiduels, notés E, qui sont dirigés radialement vers l'intérieur. Ceci contribue par conséquent à coincer et à maintenir l'insert en position, de manière à éviter tout retrait axial intempestif. Le vissage de l'organe rapporté 330, représenté de façon schématique sur la figure 8, est enfin réalisé comme dans le premier mode de réalisation, par introduction de l'extrémité filetée 332 dans le taraudage 326, depuis la face 312 du support (voir flèche F4).

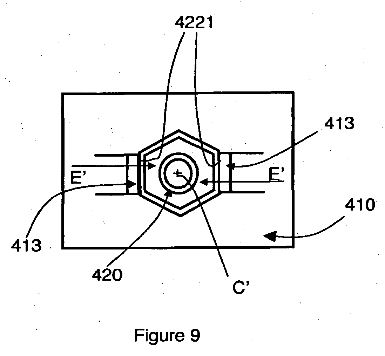

La figure 9 illustre une variante du mode de réalisation, décrit aux figures 5 à 8. On retrouve, non plus trois, mais deux languettes 413, s'étendant de part et d'autre du point C' de positionnement du centre de l'insert. Les bases de ces languettes sont parallèles, en étant espacées d'une distance correspondant à l'écart entre deux faces opposées de l'insert hexagonal. De plus ces deux languettes sont dirigées les unes vers les autres en position de repos, de sorte que leurs extrémités libres définissent une ouverture, non visible sur la figure 9, dont les dimensions transversales sont inférieures à celles de l'insert 420. Comme dans le mode de réalisation des figures 5 à 8, on introduit l'insert entre les languettes, de façon à déformer les languettes 413 radialement vers l'extérieur. Ces dernières exercent alors, sur les faces 4221 en regard, appartenant à l'insert, des efforts résiduels notés E'.

Dans les variantes des figures 5 à 9 on retrouve un contact surfacique entre les languettes et certaines faces de l'insert, ce qui assure non seulement un blocage axial en translation, par coincement, mais encore une fonction d'anti-rotation. À titre d'alternative on peut prévoir au moins une zone de contact linéique entre l'insert et les languettes, dans le cas où le contour défini par les languettes ne coïncide pas avec la section transversale de l'insert. De façon générale l'homme du métier pourra conférer, à ce contour et à cette section, tout profil adapté non circulaire, afin de garantir les deux fonctions précitées. L'homme du métier pourra aussi utiliser un nombre de languettes, qui est différent des exemples ci-dessus, En particulier, on peut prévoir d'utiliser une languette unique.

L'homme du métier aura compris qu'un ensemble comprenant au moins un support et un insert de liaison tels que décrits permet de faciliter la pose et le maintien de l'insert grâce aux moyens de coincement mutuels de l'insert et du support formés par au moins une languette appartenant au support. L'effort de la, ou les, languette(s) peut alors être suffisant pour maintenir l'insert en place dans le support. Selon une mise en oeuvre particulière un organe rapporté dont la liaison au support est réalisée par l'insert exerce une traction T sur le support. Lorsque l'extrémité de montage 34 de l'organe rapporté est disposée à l'opposé de la première face 11 du support 10, l'effort de traction T, exercé par l'organe rapporté 30 sur le support, tend à plaquer la collerette 24 contre la première face, rendant alors le montage encore plus fiable.

Dans le procédé de montage, on a au moins les étapes suivantes :
- on forme, sur le support, au moins une languette déformable 313 ; 413 délimitant une ouverture O, dont les dimensions transversales sont inférieures à celles de l'insert 320 ; 420,
- on introduit (flèche F1) l'insert 20 ; 120 ; 220 ; 320 ; 420 dans l'orifice 14 du support 10 ; 210 ; 310 ; 410, jusqu'à ce que sa collerette 24 vienne en butée contre la première face 11 du support de sorte à faire passer l'insert au travers de l'ouverture en déformant la ou chaque languette.

## Revendications

1. Ensemble comprenant un support (10 ; 210 ; 310 ; 410), et un insert (20 ; 120 ; 220 ; 320 ; 420) de liaison, l'insert étant pourvu :
- d'une collerette (24 ; 324) en butée axiale contre une première face (11 ; 311) du support,
- d'un fût (22 ; 122 ; 322 ; 422) reçu dans un orifice (14 ; 214 ; 314) du support,
et l'ensemble comprenant en outre des moyens évitant la rotation du fût de l'insert à l'intérieur de l'orifice du support,
**caractérisé en ce qu'**il comporte des moyens (121 ; f3-f6; 313; 413) de coincement mutuel de l'insert (20 ; 120 ; 220 ; 320 ; 420) et du support (10 ; 210 ; 310; 410), les moyens de coincement comprenant au moins une languette de coincement (313 ; 413) appartenant au support (310 ; 410), repliée à l'opposé de la première face (311), chaque languette étant propre à exercer, sur une face en regard de l'insert (320 ; 420), un effort de coincement (E ; E') dirigé radialement vers l'intérieur de l'orifice.

2. Ensemble selon la revendication 1, **caractérisé en ce qu'**il comprend en outre un organe rapporté (30, 330), l'insert de liaison réalisant la liaison entre le support et cet organe rapporté par des moyens de fixation (28), en particulier par vissage, l'organe rapporté comportant une extrémité (32) de fixation sur l'insert et une extrémité (34) de montage sur une structure, et **en ce que** l'extrémité de montage (34) de l'organe rapporté est disposée à l'opposé de la première face (11) du support (10), de sorte qu'un effort de traction (T), exercé par l'organe rapporté (30) sur le support, tend à plaquer la collerette (24) contre la première face.

3. Ensemble selon l'une des revendications 1 à 2, **caractérisé en ce que** les moyens de coincement forment également moyens d'anti-rotation.

4. Ensemble selon l'une des revendications 1 à 3, **caractérisé en ce que** l'insert (320 ; 420) est de section polygonale, et il est prévu au moins deux languettes de coincement (313 ; 413), réparties angulairement de façon régulière à la périphérie de l'insert.

5. Ensemble selon l'une des revendications 1 à 4, **caractérisé en ce que** les moyens de coincement comprennent au moins une zone de l'insert (121), présentant des dimensions transversales supérieures à la région (f3 - f6) de l'orifice recevant cette zone de l'insert.

6. Ensemble selon la revendication 5, **caractérisé en ce que** la zone de plus grande dimension transversale comprend au moins une saillie axiale (121), s'étendant à la périphérie de l'insert.

7. Ensemble selon la revendication 5 ou 6, **caractérisé en ce que** le fût et l'orifice sont de section polygonale, et la zone de plus grandes dimensions transversales est formé par au moins un couple de faces opposées de l'insert (220), coopérant avec au moins un couple en regard de faces opposées (f3 - f6) de l'orifice.

8. Ensemble selon l'une des revendications précédentes, **caractérisé en ce que** l'insert présente un pied d'introduction (26), de plus faibles dimensions transversales, opposé à la collerette (24).

9. Procédé de montage de l'ensemble conforme à l'une des revendications précédentes, **caractérisé en ce que**:
- on forme, sur le support, au moins une languette déformable (313 ; 413) délimitant une ouverture (O), dont les dimensions transversales sont inférieures à celles de l'insert (320 ; 420)
- on introduit (flèche F1) l'insert (20 ; 120 ; 220 ; 320 ; 420) dans l'orifice (14) du support (10 ; 210 ; 310 ; 410), jusqu'à ce que sa collerette (24) vienne en butée contre la première face (11) du support de sorte à faire passer l'insert au travers de l'ouverture en déformant la ou chaque languette.

10. Procédé selon la revendication précédente, **caractérisé en ce que** l'on fixe (flèche F2) un organe rapporté (30 ; 330) sur l'insert, depuis la seconde face (12) du support, opposée à la première face (11).

## Patentansprüche

1. Vorrichtung umfassend eine Halterung (10; 210, 310; 410) und einen Verbindungs-Einsatz (20; 120; 220; 320; 420), wobei der Einsatz versehen ist mit:- einem Kragen (24; 324), der axial gegen eine erste Seite (11; 311) der Halterung anliegt;
- einem Schaft (22; 122; 322; 422), der in einer Öffnung (14; 214; 314) der Halterung aufgenommen ist,
und die Vorrichtung ferner Mittel umfasst, die eine Drehung des Schafts des Einsatzes in der Öffnung der Halterung verhindern,
**dadurch gekennzeichnet, dass**
sie Mittel (121; f3-f6; 313; 413) zum gegenseitigen Verkeilen von Einsatz (20; 120; 220; 320; 420) und Halterung (10; 210; 310; 410) umfasst, wobei die Verkeilungsmittel mindestens eine Verkeilungsleiste (313; 413) umfassen, die zur Halterung (310; 410) gehört und entgegengesetzt zur ersten Seite (311) umgebogen ist, wobei jede Leiste geeignet ist, auf eine dem Einsatz (320; 420) gegenüberliegende Seite eine Verkeilungskraft (E; E') auszuüben, die radial zum Inneren der Öffnung hin gerichtet ist.

2. Vorrichtung nach Anspruch 1, **dadurch gekennzeichnet, dass** sie ferner ein angesetztes Element (30, 330) umfasst, wobei der Verbindungseinsatz die Verbindung zwischen der Halterung und diesem angesetzten Element insbesondere durch Verschrauben mittels Befestigungsmitteln (28) herstellt, und das angesetzte Element ein Ende (32) zur Befestigung an dem Einsatz und ein Ende (34) zur Montage an einem Aufbau hat, sowie dadurch, dass das Montageende (34) des angesetzten Elements entgegengesetzt zur ersten Seite (11) der Halterung (10) so angeordnet ist, dass eine von dem angesetzten Element (30) auf die Halterung ausgeübte Zugkraft (T) den Kragen (24) fest an die erste Seite zu pressen sucht.

3. Vorrichtung nach einem der Ansprüche 1 bis 2, **dadurch gekennzeichnet, dass** die Verkeilungsmittel auch Drehverhinderungsmittel bilden.

4. Vorrichtung nach einem der Ansprüche 1 bis 3, **dadurch gekennzeichnet, dass** der Einsatz (320; 420) einen polygonalen Querschnitt hat, und dass mindestens zwei Verkeilungsleisten (313; 413) vorgesehen sind, die gleichmäßig winklig am Umfang des Einsatzes verteilt sind.

5. Vorrichtung nach einem der Ansprüche 1 bis 4, **dadurch gekennzeichnet, dass** die Verkeilungsmittel mindestens einen Bereich des Einsatzes (121) aufweisen, der größere transversale Abmessungen hat als der Bereich (f3-f6) der Öffnung, die diesen Bereich des Einsatzes aufnimmt.

6. Vorrichtung nach Anspruch 5, **dadurch gekennzeichnet, dass** der Bereich mit den größten transversalen Abmessungen mindestens einen Axialvorsprung (121) aufweist, der sich am Umfang des Einsatzes erstreckt.

7. Vorrichtung nach Anspruch 5 oder 6, **dadurch gekennzeichnet, dass** der Schaft und die Öffnung einen polygonalen Querschnitt haben und der Bereich mit den größten transversalen Abmessungen von mindestens einem Paar entgegengesetzter Seiten des Einsatzes (220) gebildet wird, die mit mindestens einem gegenüberliegenden Paar entgegengesetzter Seiten (f3 - f6) der Öffnung zusammenwirken.

8. Vorrichtung nach einem der vorstehenden Ansprüche, **dadurch gekennzeichnet, dass** der Einsatz entgegengesetzt zum Kragen (24) einen Einführungssockel (26) mit niedrigeren transversalen Abmessungen aufweist.

9. Verfahren zum Montieren der Vorrichtung nach einem der vorstehenden Ansprüche, **dadurch gekennzeichnet, dass**
- man an der Halterung mindestens eine verformbare Leiste (313; 413) formt, die eine Öffnung (O) begrenzt, deren transversale Abmessungen kleiner sind als die des Einsatzes (320; 420).
- man den Einsatz (20; 120; 220; 320; 420) in die Öffnung (14) der Halterung (10; 210; 310; 410) einführt (Pfeil F1), bis sein Kragen (24) an die erste Seite (11) der Halterung so anschlägt, dass der Einsatz durch die Öffnung geführt wird und dabei die oder jede Leiste verformt

10. Verfahren nach dem vorstehenden Anspruch, **dadurch gekennzeichnet, dass** man von der zweiten, zur ersten Seite (11) entgegengesetzten Seite (12) der Halterung her an dem Einsatz ein angesetztes Element (30; 330) befestigt (Pfeil F2).

## Claims

1. An assembly comprising a support (10; 210; 310; 410), and a connecting insert (20 ; 120 ; 220 ; 320 ; 420), the insert being provided:
- with a flange (24 ; 324) coming up against the axial stop formed by a first surface (11 ; 311) of the support,
- with a shank (22 ; 122 ; 322 ; 422) received in an opening (14 ; 214 ; 314) of the support,
and the assembly further comprising means preventing rotation of the shank of the insert inside the support opening,
**characterized in that** it comprises means (121 ; f3-f6 ; 313 ; 413) for mutual jamming of the insert (20 ; 120 ; 220 ; 320 ; 420) and of the support (10 ; 210 ; 310 ; 410), the jamming means comprising at least one jamming tab (313 ; 413) belonging to the support (310 ; 410), folded in the opposite direction to the first surface (311), each tab being able to exert a jamming force (E ; E'), directed radially towards the inside of the opening, on a facing surface of the insert (320 ; 420).

2. The assembly according to claim 1, **characterized in that** it further comprises an added-on part (30, 330), the connecting insert performing the link between the support and this added-on part by fixing means (28), in particular by screw-fastening, the added-on part comprising an end (32) for fixing on the insert and an end (34) for fitting on a structure, and **in that** the fitting end (34) of the added-on part is arranged opposite the first surface (11) of the support (10), so that a tractive force (T), exerted by the added-on part (30) on the support, tends to press the flange (24) against the first surface.

3. The assembly according to one of claims 1 to 2, **characterized in that** the jamming means also form anti-rotation means.

4. The assembly according to one of claims 1 to 3, **characterized in that** the insert (320 ; 420) is of polygonal cross-section, and at least two jamming tabs (313 ; 413) are provided, distributed angularly in regular manner on the periphery of the insert.

5. The assembly according to one of claims 1 to 4, **characterized in that** the jamming means comprise at least one area of the insert (121) presenting larger transverse dimensions than the region (f3 - f6) of the opening receiving this area of the insert.

6. The assembly according to claim 5, **characterized in that** the area of largest transverse dimension comprises at least one axial protuberance (121) extending on the periphery of the insert.

7. The assembly according to claim 5 or 6, **characterized in that** the shank and the opening are polygonal cross-section, and the area of the largest transverse dimensions is formed by at least a couple of opposite surfaces of the insert (220), collaborating with at least a facing couple of opposite surfaces (f3 - f6) of the opening.

8. The assembly according to one of the foregoing claims, **characterized in that** the insert presents an insertion foot (26), of smaller transverse dimensions, opposite the flange (24).

9. A method for fitting the assembly in accordance with one of the foregoing claims, **characterized in that**:
- at least one deformable tab (313 ; 413), delineating an opening (O) the transverse dimensions of which are smaller than those of the insert (320 ; 420), is formed on the support,
- the insert (20 ; 120 ; 220 ; 320 ; 420) is inserted (arrow F1) in the opening (14) of the support (10 ; 210 ; 310 ; 410), until its flange (24) comes up against the stop formed by the first surface (11) of the support so as to make the insert pass through the opening deforming the or each tab.

10. The method according to the previous claim, **characterized in that** an added-on part (30 ; 330) is fixed (arrow F2) onto the insert, from the second surface (12) of the support, opposite the first surface (11).
